# FASCICULE DE BREVET EUROPEEN

(11) **EP 3 277 521 B1**
(45) Date de publication et mention de la délivrance du brevet: **07.08.2019**
(21) Numéro de dépôt: 16714499.7
(22) Date de dépôt: 24.03.2016
(51) Int. Cl.: B60C 11/01, B60C 11/12

(54) **PNEUMATIQUE COMPRENANT UNE BANDE DE ROULEMENT COMPORTANT DES CANAUX**
REIFEN MIT EINER LAUFFLÄCHENSCHICHT MIT KANÄLEN
TYRE COMPRISING A TREAD LAYER CONTAINING CHANNELS

(30) Priorité: 01.04.2015 FR 1552806
(43) Date de publication de la demande: 07.02.2018
(73) Titulaire: Compagnie Générale des Etablissements Michelin, 63000 Clermont-Ferrand (FR)
(72) Inventeur: VANTAL, Marie-Hélène, 63040 Clermont-Ferrand Cedex 9 (FR); DEBORDEAUX, Héloïse, 63040 Clermont-Ferrand Cedex 9 (FR); VANDAELE, Mathieu, 63040 Clermont-Ferrand Cedex 9 (FR); YOKOKAWA, Kazutaka, 63040 Clermont-Ferrand Cedex 9 (FR); LEDIEU, Vincent, 63040 Clermont-Ferrand Cedex 9 (FR); BONNETON, Quentin, 63040 Clermont-Ferrand Cedex 9 (FR)
(74) Mandataire: Demaure, Pierre-Yves
(86) Numéro de dépôt international: PCT/FR2016/050657
(87) Numéro de publication internationale: WO 2016/156705

(56) Documents cités:
- US-A- 2 121 955
- US-A1- 2013 284 335

## Description

### DOMAINE DE L'INVENTION

La présente invention concerne un pneumatique comprenant une bande de roulement. Plus particulièrement, l'invention concerne une bande de roulement comportant une pluralité de canaux qui sont non visibles lorsque la bande de roulement est dans un état neuf.

Un pneumatique correspondant au préambule de la revendication 1 est connu du document US 2013/0284335 A1.

### ETAT DE LA TECHNIQUE

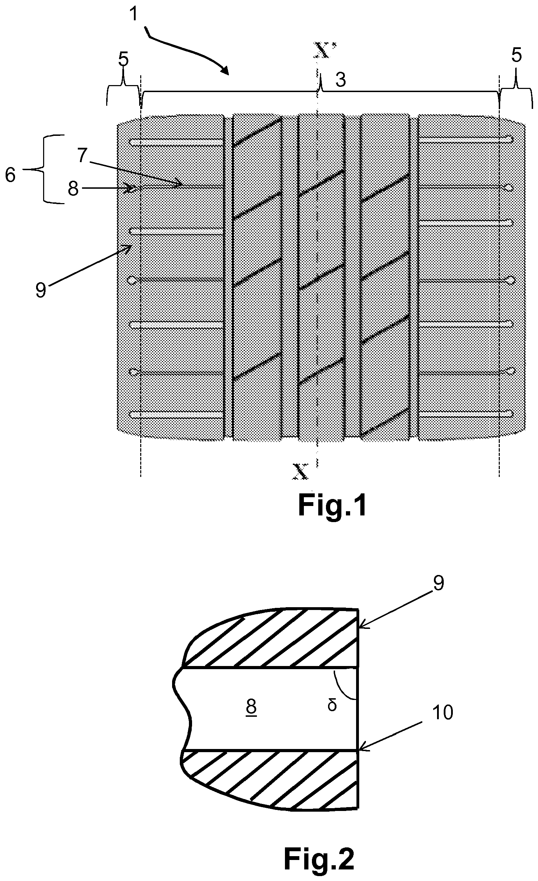

La **figure** 1 présente schématiquement une partie d'un pneumatique 1 selon l'art antérieur. Le pneumatique comprend une bande de roulement 3 comportant une surface de roulement destinée à vernir en contact avec une chaussée au cours d'un roulage du pneumatique. Le pneumatique comprend également des zones épaule 5 délimitant la bande de roulement. Ce pneumatique comprend en outre une pluralité de découpures complexes 6 s'étendant dans la bande de roulement 3 et dans les zones épaule 5. Chaque découpure complexe 6 comporte une incision 7 débouchant sur la surface de roulement et un canal 8 prolongeant l'incision 7 dans la profondeur de la bande de roulement. Le canal 8 débouche sur une surface 9 de la zone épaule 5 en formant une trace globalement circulaire. Le canal 8 contribue ainsi à améliorer l'évacuation de l'eau hors de la bande de roulement, lorsque le pneumatique roule sur une chaussée humide.

La **figure 2** présente une vue en coupe au niveau du canal 8 sortant sur la surface 9 de la zone épaule 5. Sur cette **figure 2****,** on constate que le canal 8 débouche perpendiculairement à la surface 9 de la zone épaule 5. Dit autrement, l'angle de sortie δ, mesuré entre le canal 8 et la surface 9 de la zone épaule 5 est égal à 90 degrés. La sortie 10 entre le canal et la surface 9 est particulièrement sensible aux efforts transversaux que peut subir la zone épaule, notamment en virage et particulièrement en limite d'adhérence. Sous l'effet de contraintes mécaniques, par exemple par l'action de cailloux, une partie de la gomme présente sur cette zone de sortie 10 peut s'arracher. Ces arrachements sont susceptibles de générer des amorces de fissures pouvant se propager dans le reste du pneumatique.

Il existe donc un besoin d'améliorer l'évacuation de l'eau hors de la bande de roulement lorsque le pneumatique roule sur une chaussée humide, tout en limitant les risques de génération de fissures sur la zone épaule du pneumatique.

### DEFINITIONS

Par « pneumatique », on entend tous les types de bandages élastiques soumis à une pression interne ou non.

Par « matériau caoutchoutique », on entend un élastomère diénique, c'est-à-dire de manière connue un élastomère issu d'au moins en partie (c'est-à-dire homopolymère ou un copolymère) de monomères diènes (monomères porteurs de deux doubles liaisons carbone-carbone, conjuguées ou non).

Par « bande de roulement » d'un pneumatique, on entend une quantité de matériau caoutchoutique délimitée par des surfaces latérales et par deux surfaces principales dont l'une, appelée surface de roulement, est destinée à entrer en contact avec une chaussée lorsque le pneumatique roule. Lors d'un roulage en ligne droite et lorsque le pneumatique est gonflé à sa pression de référence, la surface de roulement forme une aire de contact dont les bords constituent les frontières entre la bande de roulement et les zones épaules. Les zones épaules constituent alors des zones de transition entre la bande de roulement et les flancs du pneumatique. On notera que l'aire de contact présente une largeur maximale C définie par la norme E.T.R.T.O (« European Tyre and Rim Technical Organisation ») et dans laquelle C= (1.075-0.005ar)^{∗}S^{1.001} avec ar le rapport nominal d'aspect et s la grosseur du boudin théorique sur la jante de mesure.

Par « rainure », on entend une découpure (« cut-out » en anglais) dont les faces de matière ne se touchent pas dans les conditions usuelles de roulage. Généralement, la largeur d'une rainure est supérieure ou égale à 2 mm.

Par « incision », on entend une découpure délimitant deux parois latérales de deux blocs adjacents, lesdites parois latérales se touchant dans les conditions usuelles de roulage. Généralement, la largeur d'une incision est inférieure à 2 mm.

Par direction radiale, on entend une direction qui est perpendiculaire à l'axe de rotation du pneumatique (cette direction correspond à la direction de l'épaisseur de la bande de roulement).

Par direction transversale ou axiale, on entend une direction parallèle à l'axe de rotation du pneumatique.

Par direction circonférentielle, on entend une direction qui est tangente à tout cercle centré sur l'axe de rotation du pneumatique. Cette direction est perpendiculaire à la fois à la direction axiale et à une direction radiale.

### RESUME DE L'INVENTION

L'invention concerne un pneumatique comprenant une bande de roulement, ladite bande de roulement comportant une surface de roulement adaptée pour venir en contact avec la chaussée, une zone épaule délimitant en partie la bande de roulement, une pluralité de découpures complexes s'étendant dans la bande de roulement et dans la zone épaule. Chaque découpure complexe comporte une incision débouchant sur la surface de roulement et un canal prolongeant l'incision dans la profondeur de la bande de roulement et débouchant sur une surface de la zone épaule. Le canal de l'incision comporte une partie principale de largeur L1 s'étendant dans la bande de roulement et une partie élargie s'étendant dans la zone épaule à partir de la partie principale du canal jusqu'à la surface de la zone épaule. Vue en coupe, la partie élargie fait avec la surface de la zone épaule un angle de sortie δ inférieur à 90 degrés.

La partie élargie du canal assure la transition entre la partie principale de ce canal et la zone épaule. En prévoyant un angle de sortie δ inférieur à 90 degrés, on renforce la sortie entre le canal et la zone épaule et on limite en conséquence le risque d'arrachement de la gomme au niveau de cette sortie, au cours des différents roulages du pneumatique.

Dans un mode de réalisation préférentiel, l'angle de sortie δ est compris entre 35 degrés et 50 degrés.

De cette manière, on s'assure d'une bonne robustesse de la sortie entre le canal et la zone épaule mais également à la frontière entre la partie principale du canal et sa partie élargie.

Dans un autre mode de réalisation, la partie élargie du canal a la forme générale d'un cône.

En conditions hivernales, des portions de glace peuvent se trouver bloquer dans les parties élargies des canaux, par exemple, lorsque le véhicule est en stationnement dans la neige. En roulage, ces portions de glace peuvent contraindre mécaniquement la gomme de la bande de roulement. En prévoyant une partie élargie de canal en forme de cône, on favorise l'évacuation de ces portions de glace dans les premiers mètres de roulage de la bande de roulement.

Dans un mode de réalisation préférentiel, la partie élargie du canal est formée d'une pluralité de facettes.

On améliore encore davantage la robustesse de la partie élargie du canal.

Dans un mode de réalisation non limitatif, la partie élargie présente des parois convexes de rayon R.

De cette manière, on limite le coincement de cailloux dans le canal, au cours d'un roulage du pneumatique.

Dans un mode de réalisation préférentiel, le rayon R des parois convexes diminue en direction de la zone épaule, cette variation de rayon étant continue.

De cette manière, on facilite la fabrication du canal et de son élargissement au cours de l'opération de vulcanisation de la bande de roulement.

Dans un autre mode de réalisation, la partie élargie du canal a une largeur maximale L2 au moins égale à 1,5 fois la largeur L1 de la partie principale de ce canal.

On améliore ainsi la capacité du canal à évacuer l'eau hors de la bande de roulement lors d'un roulage sur une chaussée humide.

### BREVE DESCRIPTION DES DESSINS

D'autres caractéristiques et avantages de l'invention ressortiront de la description suivante, donnée à titre d'exemple, sans caractère limitatif, en regard des dessins annexés sur lesquels :
- la **figure 1** présente schématiquement une partie d'un pneumatique selon l'art antérieur ;
- la **figure 2** représente une vue en coupe partielle du pneumatique de la **figure 1** au niveau d'un canal ;
- la **figure 3** représente schématiquement une partie d'un pneumatique selon l'invention au niveau d'une sortie d'un canal ;
- la **figure 4** représente une vue en coupe partielle du pneumatique de la **figure 3** selon la ligne A-A' ;
- la **figure 5** représente une variante de réalisation d'un canal du pneumatique de la **figure 3****.**

Dans la description qui va suivre, des éléments sensiblement identiques ou similaires seront désignés par des références identiques.

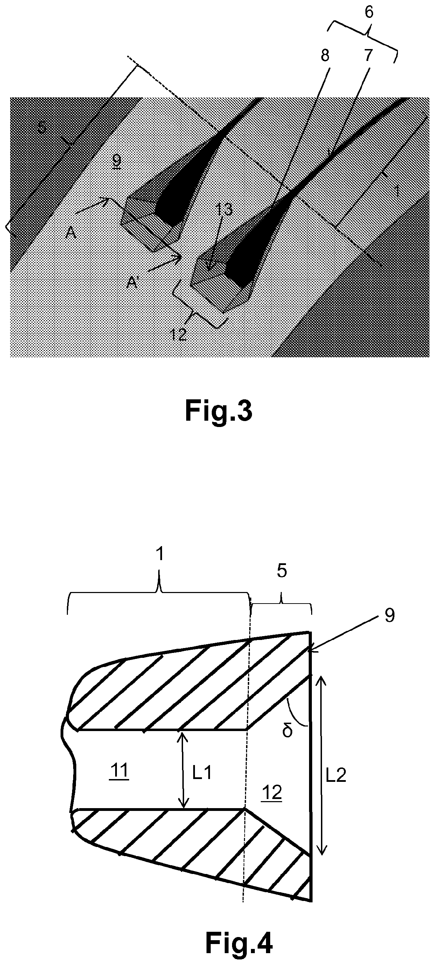

La **figure 3** représente un pneumatique 1 conformément à l'invention. Ce pneumatique comprend une bande de roulement 3 destinée à venir en contact avec une chaussée au cours d'un roulage. La bande de roulement est prolongée par une zone épaule 5 qui, dans des conditions usuelles d'utilisation, ne rentre pas en contact avec la chaussée. Le pneumatique est pourvu d'une pluralité de découpures complexes s'étendant dans la bande de roulement 3 et dans la zone épaule 5. Chaque découpure complexe 5 comporte une incision 7 débouchant sur la surface de roulement de la bande de roulement et un canal 8 prolongeant l'incision dans la profondeur de la bande de roulement. Le canal 8 débouche sur une surface 9 de la zone épaule 5.

La **figure 4** présente de manière plus détaillée le canal 8. Ce canal 8 comporte une partie principale 11 de largeur L1. Cette partie principale 11 s'étend dans la bande de roulement 3. Le canal 8 comporte également une partie élargie 12. Cette partie élargie s'étend dans la zone épaule 5 à partir de la partie principale 11 du canal jusqu'à la surface 9 de la zone épaule 5. La partie élargie 12 fait avec cette surface 9 un angle de sortie δ inférieur à 90 degrés. Dans un mode de réalisation préférentiel, l'angle de sortie δ est compris entre 35 degrés et 50 degrés.

On notera que la partie élargie 12 commence ici à l'interface entre la bande de roulement 3 et la zone épaule 5. En variante, il est possible que la partie élargie commence avant cette interface, c'est-à-dire dans la partie principale 11 du canal, ou après cette interface. On notera également que la largeur maximale L2 de la partie élargie 12 est au moins égale à 1,5 fois la largeur L1 de la partie principale 11 du canal 8.

On notera enfin que la partie élargie 12 a globalement la forme d'un cône. Dans une variante de réalisation, cette partie élargie 12 comporte une pluralité de facettes 13 s'étendant dans la longueur de la partie élargie, comme cela est visible à la **figure 3****.**

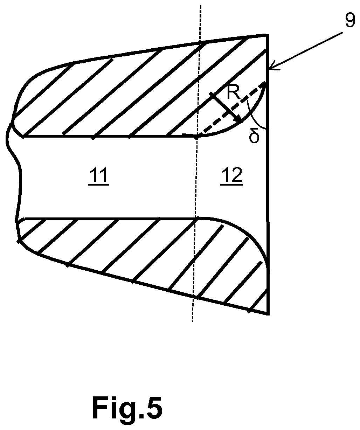

La **figure 5** est une variante de réalisation de la partie élargie 12. Dans cette variante, la partie élargie présente des parois convexes de rayon R. Ce rayon R est, ici, compris entre 2 mm et 6 mm. On notera que l'angle de sortie δ est ici calculé entre la surface 9 de la zone épaule et un segment reliant une première intersection entre la paroi convexe de la partie élargie et la surface 9 et une seconde intersection entre cette paroi convexe et la partie principale 11 du canal.

Dans un mode de réalisation alternatif, le rayon R des parois convexes varie en direction de la zone épaule 5, par exemple, ce rayon diminue. De manière préférentielle, cette variation de rayon est continue.

L'invention n'est pas limitée aux exemples décrits et représentés et diverses modifications peuvent y être apportées sans sortir de son cadre.

## Revendications

1. Pneumatique comprenant une bande de roulement (3), ladite bande de roulement comportant une surface de roulement adaptée pour venir en contact avec la chaussée, une zone épaule (5) délimitant en partie la bande de roulement (3), une pluralité de découpures complexes (6) s'étendant dans la bande de roulement (3) et dans la zone épaule (5), chaque découpure complexe (6) comportant une incision (7) débouchant sur la surface de roulement et un canal (8) prolongeant l'incision (7) dans la profondeur de la bande de roulement et débouchant sur une surface (9) de la zone épaule (5), **caractérisé en ce que** le canal (8) de l'incision (7) comporte une partie principale (11) s'étendant dans la bande de roulement (3) et une partie élargie (12) s'étendant dans la zone épaule (5) à partir de la partie principale du canal jusqu'à la surface (9) de la zone épaule (5), et **en ce que,** vue en coupe, la partie élargie (12) fait avec la surface (9) de la zone épaule (5) un angle de sortie δ inférieur à 90 degrés.

2. Pneumatique selon la revendication 1, **caractérisé en ce que** l'angle de sortie δ est compris entre 35 degrés et 50 degrés.

3. Pneumatique selon l'une des revendications 1 à 2, **caractérisé en ce que** la partie élargie (12) du canal (8) à la forme générale d'un cône.

4. Pneumatique selon l'une des revendications 1 à 3, **caractérisé en ce que** la partie élargie (12) comporte une pluralité de facettes (13).

5. Pneumatique selon l'une des revendications 1 à 4, **caractérisé en ce que** la partie élargie (12) présente des parois convexes de rayon R.

6. Pneumatique selon la revendication 5, **caractérisé en ce que** le rayon R des parois convexes diminue en direction de la zone épaule (5), cette variation de rayon étant continue.

7. Pneumatique selon l'une des revendications 1 à 6, **caractérisé en ce que** la partie élargie (12) du canal (8) a une largeur maximale L2 au moins égale à 1,5 fois la largeur L1 de la partie principale (11) de ce canal (8).

## Patentansprüche

1. Reifen umfassend einen Laufstreifen (3), wobei der Laufstreifen eine Lauffläche aufweist, die geeignet ist, mit der Straße in Kontakt zu treten, einen Schulterbereich (5), der den Laufstreifen (3) zum Teil begrenzt, eine Mehrzahl von komplexen Ausschnitten (6), die sich in dem Laufstreifen (3) und in dem Schulterbereich (5) erstrecken, jeder komplexe Ausschnitt (6) aufweisend einen Einschnitt (7), der in die Lauffläche mündet, und einen Kanal (8), der den Einschnitt (7) in der Tiefe des Laufstreifens verlängert und in die Fläche (9) des Schulterbereichs (5) mündet, **dadurch gekennzeichnet, dass** der Kanal (8) des Einschnitts (7) einen Hauptabschnitt (11) aufweist, der sich in dem Laufstreifen (3) erstreckt, und einen vergrößerten Abschnitt (12), der sich in dem Schulterbereich (5) ab dem Hauptabschnitt des Kanals bis zu der Fläche (9) des Schulterbereichs (5) erstreckt, und dadurch, dass in der Schnittansicht der vergrößerte Abschnitt (12) mit der Fläche (9) des Schulterbereichs (5) einen Austrittswinkel δ kleiner als 90 Grad bildet.

2. Reifen nach Anspruch 1, **dadurch gekennzeichnet, dass** der Austrittswinkel δ zwischen 35 Grad und 50 Grad liegt.

3. Reifen nach einem der Ansprüche 1 bis 2, **dadurch gekennzeichnet, dass** der vergrößerte Abschnitt (12) des Kanals (8) die allgemeine Form eines Kegels aufweist.

4. Reifen nach einem der Ansprüche 1 bis 3, **dadurch gekennzeichnet, dass** der vergrößerte Abschnitt (12) eine Mehrzahl von Facetten (13) aufweist.

5. Reifen nach einem der Ansprüche 1 bis 4, **dadurch gekennzeichnet, dass** der vergrößerte Abschnitt (12) konvexe Wände mit einem Radius R aufweist.

6. Reifen nach Anspruch 5, **dadurch gekennzeichnet, dass** der Radius R der konvexen Wände in Richtung des Schulterbereichs (5) abnimmt, wobei diese Radiusänderung durchgängig ist.

7. Reifen nach einem der Ansprüche 1 bis 6, **dadurch gekennzeichnet, dass** der vergrößerte Abschnitt (12) des Kanals (8) eine maximale Breite L2 aufweist, die mindestens gleich dem 1,5-fachen der Breite L1 des Hauptabschnitts (11) dieses Kanals (8) ist.

## Claims

1. Tyre comprising a tread (3), said tread having a tread surface designed to come into contact with the road surface, a shoulder region (5) partially delimiting the tread (3), a plurality of complex cutouts (6) extending through the tread (3) and through the shoulder region (5), each complex cutout (6) comprising a sipe (7) that leads onto the tread surface and a channel (8) that extends the sipe (7) into the depth of the tread and leads onto a surface (9) of the shoulder region (5), **characterized in that** the channel (8) of the sipe (7) has a main part (11) that extends through the tread (3) and a widened part (12) that extends through the shoulder region (5) from the main part of the channel to the surface (9) of the shoulder region (5), and **in that,** as seen in cross section, the widened part (12) makes, with the surface (9) of the shoulder region (5), an outlet angle δ of less than 90 degrees.

2. Tyre according to Claim 1, **characterized in that** the outlet angle δ is between 35 degrees and 50 degrees.

3. Tyre according to either of Claims 1 and 2, **characterized in that** the widened part (12) of the channel (8) has the overall shape of a cone.

4. Tyre according to one of Claims 1 to 3, **characterized in that** the widened part (12) has a plurality of facets (13).

5. Tyre according to one of Claims 1 to 4, **characterized in that** the widened part (12) has convex walls of radius R.

6. Tyre according to Claim 5, **characterized in that** the radius R of the convex walls decreases in the direction of the shoulder region (5), this variation in radius being continuous.

7. Tyre according to one of Claims 1 to 6, **characterized in that** the widened part (12) of the channel (8) has a maximum width L2 at least equal to 1.5 times the width L1 of the main part (11) of this channel (8).
